# EUROPEAN PATENT SPECIFICATION

(11) **EP 3 272 986 B1**
(45) Date of publication and mention of the grant of the patent: **01.12.2021**
(21) Application number: 15885513.0
(22) Date of filing: 23.03.2015
(51) Int. Cl.: E05F 15/43, B60J 1/00, B60J 1/17, E05F 15/689

(54) **VEHICLE DOOR AND VEHICLE**
FAHRZEUGTÜR UND FAHRZEUG
PORTIÈRE DE VÉHICULE ET VÉHICULE

(30) Priority: 16.03.2015 JP 2015052718
(43) Date of publication of application: 24.01.2018
(73) Proprietor: Mitsuba Corporation, Kiryu-shi, Gunma 376-8555 (JP)
(72) Inventor: IKEDA, Hiroyuki, Ueda-shi Nagano 386-0406 (JP); TAKEHARA, Hideaki, Ueda-shi Nagano 386-0406 (JP); SAITO, Yasuhiro, Ueda-shi Nagano 386-0406 (JP); UMEHARA, Sadaji, Ueda-shi Nagano 386-0406 (JP); KONDO, Tsuyoshi, Ueda-shi Nagano 386-0406 (JP); YOSHIZAWA, Masakane, Ueda-shi Nagano 386-0406 (JP); KASHIWAGI, Hideaki, Ueda-shi Nagano 386-0406 (JP); KOBAYASHI, Mayu, Ueda-shi Nagano 386-0406 (JP)
(74) Representative: Betten & Resch
(86) International application number: PCT/JP2015/058759
(87) International publication number: WO 2016/147418

(56) References cited:
- DE-A1-102007 001 180
- JP-A- 2006 316 562
- JP-A- 2007 186 915
- JP-A- 2007 186 916
- JP-U- S6 240 176
- US-A1- 2002 179 822
- US-A1- 2005 276 449
- US-A1- 2005 276 449
- US-A1- 2008 074 067
- US-A1- 2008 074 067

## Description

### Technical Field

The present invention relates to a vehicle door and a vehicle.

### Background Art

In recent years, vehicle window glass raising/lowering devices for automatically raising or lowing window glasses are mounted on vehicles so that windows can be easily opened or closed.

Vehicles doors have a storage portion for housing a retracted window glass and a frame portion provided above the storage portion, and vehicle window glass raising/lowering devices are provided with a drive mechanism for moving a window glass vertically relative to the frame portion and a control unit for controlling the drive mechanism.

Since the window glasses are electrically raised or lowered, the vehicle window glass raising/lowering devices are generally provided with a mechanism to prevent pinching by window glass.

It is known that one of such mechanism is configured to monitor variation in rotational speed of a motor which drives a window glass, to determine that a foreign object is pinched by the window glass when a load increases and the rotational speed of the motor is reduced during raising the window glass, and to perform various safety operations such as automatic lowering of window glass by reversing its movement direction.

In such a mechanism, however, the safety operations are performed after a foreign object (part of human body, etc.) is actually caught. Therefore, a load is inevitably applied to human body and this causes a safety problem. For example, in case of a vehicle having window glasses of which upper edges are inclined obliquely downward at end portions in the front-back direction of the vehicle, and when a foreign object such as finger enters a wedge-shaped space between the window glass and the frame portion during when the window glass is moving up, a large load may be applied to a part of human body, etc., even when the safety operation is performed. Furthermore, in this mechanism, since a region of, e.g., **4** mm from the closing end for the window glass is often configured as an insensitive zone so that full closing of the window glass is not incorrectly detected as occurrence of pinching, the safety operation may not be performed when, e.g., a finger of a young child is trapped, hence, improvement is desired.

The vehicle window glass raising/lowering device disclosed in PTL **1** solved such problems.

In PTL **1,** it is described that a camera is located on the vehicle interior side with respect to the window glass as well as on the lower-front side of the vehicle with respect to the window glass, a foreign object to be possibly pinched by the window glass is detected based on an image captured by the camera, and various safety operations such as automatic lowering of window glass is performed.

In PTL **1,** it is also described that a marking applied around a window frame or an edge of the outline of the window frame, etc., is used as a feature amount for foreign object determination, and various safety operations are performed when a foreign object is present between the markers, etc., used as a feature amount and the camera.

The detection of the foreign object to be possibly pinched by the window glass based on the image captured by the camera as described in PTL **1** allows a safety operation to be performed before the object is pinched, and safety is thereby further improved.

### Citation List

### Patent Literature

PTL **1:** JP 2007/186915 A pinch prevention system using two cameras located at different positions and taking images of an observation region is disclosed in DE 10 2007 001 180 A1. The images of the observation region are compared by a processor, and in case of a non-agreement a control signal is outputted to adrive mechanism to reverse the closing motion of a shifting element.

Other pinch prevention systems are disclosed in US 2008/0074067 A1 and US 2005/0276449 A1.

### Summary of Invention

### Technical Problem

In the meantime, in, e.g., a vehicle having a thin door trim such as a compact car which is classed as a small size vehicle, a part of the passenger's body is located close to the window glass, i.e., located between the camera and the marker, etc., even in normal use depending on the position of the seat or the physical size of the passenger, and this causes a safety operation such as automatic lowering of window glass or halt of window glass movement to be performed during raising the window glass even though there is actually no possibility of getting pinched by the window glass. There is also a case where the window glass cannot be raised or lowered even though the raising/lowering operation is intended. In such a case, it is not possible to close or move the window even when a user wants to close or move the window in normal use, causing inconvenience.

To improve convenience, the camera and the marker, etc., could be provided very close to the window glass. In this case, however, a foreign object cannot be detected unless the foreign object advances very close to the window glass. Therefore, the safety operation performed after detection of the foreign object may be too late, resulting in that the foreign object gets pinched by the window glass and safety decreases. Particularly in a vehicle with a small door trim width or small sash width, the position of the camera or marker, etc., is close to the window glass and sufficient safety may not be ensured.

It is an object of an embodiment of the invention to provide a vehicle door and a vehicle that makes it possible to improve convenience while maintaining safety.

### Solution to Problem

The present invention is defined in claim 1. The dependent claims define embodiments of the invention.

The vehicle door according to an embodiment is configured such that "a minimum distance in a vehicle width direction between a detection surface and an inner surface of the window glass at a lower edge of the detection surface is smaller than a minimum distance in the vehicle width direction between the detection surface and the inner surface of the window glass at an upper edge of the detection surface". In this configuration, since the distance between the window glass and the detection surface is large in an upper region in which pinching by the window glass is likely to occur, it is possible to perform a pinch prevention operation before a foreign object makes contact. Meanwhile, since the distance between the window glass and the detection surface is small in a lower region in which a part of passenger's body, etc., is likely to come close to the window glass in normal use, it is possible to prevent such a problem that the pinch prevention operation is performed despite no risk of getting pinched by the window glass, hence, convenience is improved. As a result, both safety and convenience can be achieved even in, e.g., vehicles with thin door trim, such as compact car classed as a small size vehicle.

### Advantageous Effects of Invention

According to an embodiment of the invention, it is possible to provide a vehicle window glass raising/lowering device that makes it possible to improve convenience while maintaining safety, a vehicle door, and a vehicle.

### Brief Description of Drawings

**FIG.1** is an explanatory diagram illustrating a vehicle window glass raising/lowering device in an embodiment of the present invention.
**FIG.2** is an explanatory diagram illustrating a door when viewed from the upper side inside a vehicle.
**FIG.3** is an explanatory diagram illustrating the door when viewed from the lower-front side of the vehicle.
**FIG.4A** is an explanatory diagram illustrating the positions and alignment of a camera and a detection line.
**FIG.4B** is an enlarged view of **FIG.4A** showing the portion provided with the camera.
**FIG.5** is an explanatory diagram illustrating an example of an image captured by the camera after trimming.
**FIG.6** is a schematic explanatory diagram illustrating an example of a detection surface.
**FIG.7** is an explanatory diagram illustrating an example of the positions and alignment of the camera and the detection line.
**FIG.8** is an explanatory diagram illustrating the detection surface of **FIG.6** when viewed from above.
**FIG.9** is a schematic explanatory diagram illustrating an example of the detection surface.
**FIG.10** is a schematic explanatory diagram illustrating an example of the detection surface.
**FIG.11** is a schematic explanatory diagram illustrating an example of the detection surface.
**FIG.12** is a schematic explanatory diagram illustrating an example of the detection surface.
**FIG.13** is a flowchart showing a control flow of the vehicle window glass raising/lowering device.

### Description of Embodiment

### (Embodiment)

### An embodiment of the invention will be described below in reference to the drawings

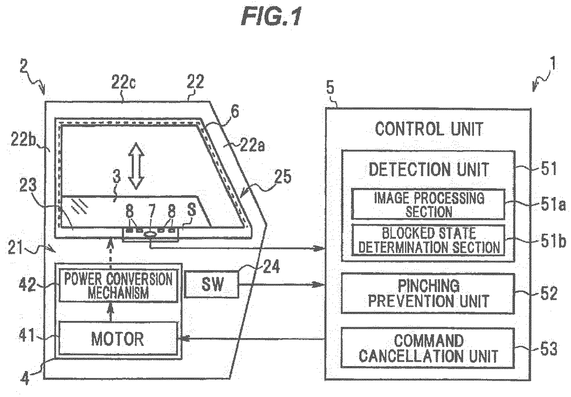

**FIG.1** is an explanatory diagram illustrating a vehicle window glass raising/lowering device in the present embodiment.

As shown in **FIG.1**, a door **2** of a vehicle (vehicle door) mounting a vehicle window glass raising/lowering device **1** has a storage portion **21** for housing a window glass **3** and a frame portion **22** provided above the storage portion **21**. A door trim **23** is attached on the vehicle interior side of the storage portion **21** so as to cover the storage portion **21**.

The frame portion **22** is composed of a rear upright portion **22**a extending upwards from an end of the storage portion **21** on the rear side in the front-back direction of the vehicle, a front upright portion **22**b extending upwards from the storage portion **21** on the front side with respect to the rear upright portion **22**a, and an upper extended portion **22**c extending from the top end of the rear upright portion **22**a to the top end of the front upright portion **22**b. When the window glass **3** is fully closed, the window glass **3** is positioned in a space surrounded by the frame portion **22** and the upper edge portion of the door trim **23**. That is, a window frame **25** is composed of the frame portion **22** and the upper edge portion of the door trim **23**.

The vehicle window glass raising/lowering device **1** is provided with a drive mechanism **4** for driving the window glass **3** and a control unit **5** for controlling the drive mechanism **4**.

The drive mechanism **4** is to move the window glass **3** vertically relative to the window frame **25,** and is provided with a motor **41** such as DC motor and a power conversion mechanism **42** for converting a drive force of the motor **41** into power to vertically move the window glass **3**. The power conversion mechanism **42** which can be used here is, e.g., a window regulator which is provided with a carrier plate supporting the window glass **3** and slidably moving along a guide rail and is configured to slidably move a wire along the guide rail by a drive force of the motor **41** and thereby to vertically move the carrier plate attached to the wire and the window glass **3** along the guide rail. An X-Arm type or another type of regulator can be also used as the power conversion mechanism **42**.

A switch (SW) **24** is provided on the door 2 to open/close the window glass **3**. An output signal line of the switch **24** is connected to the control unit **5**. The switch **24** is constructed from, e.g., a two-stage click-type rocker switch which is configured to output a signal to the control unit **5**, such that a first-level move-down click signal is output when an end on the move-down side is clicked to the first level, a second-level move-down click signal is output when the end on the move-down side is clicked to the second level, a first-level move-up click signal is output when the other end on the move-up side is clicked to the first level, and a second-level move-up click signal is output when the other end on the move-up side is clicked to the second level.

The control unit **5** controls the drive mechanism **4** according to the signal from the switch **24** to vertically move the window glass **3.** The control unit **5,** as a control unit constructed by appropriately combining CPU, memory, interface and software, etc., is mounted on the door **2.** Other than on the door **2,** the control unit **5** may alternatively be mounted as a part of, e.g., an electronic control unit (ECU) which controls mirrors or seats of the vehicle.

The control unit **5** is configured to control the drive mechanism **4** such that when a first-level move-down click signal is input from the switch **24,** the window glass **3** is lowered during when the signal is being input, and when a second-level move-down click signal is input, the window glass **3** continues to move down until the window glass **3** reaches the bottom or the switch **24** is operated again. Also, the control unit **5** controls the drive mechanism **4** such that when a first-level move-up click signal is input from the switch **24,** the window glass **3** is raised during when the signal is being input, and when a second-level move-up click signal is input, the window glass **3** continues to move up until the window glass **3** reaches the top or the switch **24** is operated again.

Next, a configuration to prevent pinching by the window glass **3** will be described.

The vehicle window glass raising/lowering device **1** is provided with a camera **7** which captures an image of a detection line **6.** The detection line **6** is provided on the vehicle interior side with respect to the window glass **3** and is at least partially along the outer edge of the window glass **3** in a state that the door **2** and the window glass **3** are closed. In the present embodiment, whether or not a foreign object to be possibly pinched by the window glass **3** is present is judged based on an image captured by the camera **7.** A specific configuration and installed position of the camera **7** will be described later.

The detection line **6** is a reference line for judging presence/absence of a foreign object to be possibly pinched by the window glass **3,** and is provided on the vehicle interior side with respect to the window glass **3.** A specific configuration and setting position of the detection line **6** will be described later.

In the present embodiment, light sources **8** emitting infrared radiation toward the detection line **6** are also provided. The camera **7** is constructed from an infrared camera which captures the infrared radiation emitted from the light sources **8** and reflected by the detection line **6.** Since the light sources **8** are provided, a foreign object to be possibly pinched can be detected also during the night, or in a **dark** place even in a daytime where infrared radiation does not reach, e.g., in an underground parking, etc. A light source which emits near infrared radiation can be used as the light source **8.**

The control unit **5** has a detection unit **51** and a pinching prevention unit **52.** The detection unit **51,** which is one aspect of the detection means of the invention, detects a blocked state in which the detection line **6** captured by the camera **7** is at least partially blocked by a foreign object. The pinching prevention unit **52,** which is one aspect of the pinching prevention means of the invention, causes the drive mechanism **4** to perform a pinch prevention operation for preventing pinching by the window glass **3** when the blocked state is detected by the detection unit **51** during when the window glass **3** is moved by the drive mechanism **4.**

The detection unit **51** is provided with an image processing section **51**a which processes an image captured by the camera **7** and extracts the detection line **6,** and a blocked state determination section **51**b which determines, based on the image processed by the image processing section **51**a, whether or not it is the blocked state in which the detection line **6** is at least partially blocked by a foreign object.

A specific method of extracting the detection line **6** by the image processing section **51**a is not specifically limited. For example, when an unnecessary portion is removed by trimming the image captured by the camera **7** and posterization process, binarization process or edge detection process is performed, the detection line **6** with brightness different from surrounding members can be extracted.

The blocked state determination section **51**b is configured such that, for example, an image in a non-blocked state (which is an image after being processed by the image processing section **51**a) is preliminarily stored as an initial state image, and whether or not the detection line **6** is blocked by an foreign object is determined by comparing the initial state image to an image output from the image processing section **51**a. The blocked state determination section **51**b is configured to, e.g., compare the initial state image to an image output from the image processing section **51**a and to determine it is the blocked state when a difference of the edge of the extracted detection line **6** or a difference of the area of the detection line **6** exceeds a preset foreign object determination threshold.

The pinching prevention unit **52** causes the drive mechanism **4** to perform a pinch prevention operation for preventing pinching by the window glass **3** when the blocked state is detected by the detection unit **51** during when the window glass **3** is moved by the drive mechanism **4**. The pinch prevention operation includes an operation of stopping movement of the window glass **3**, an operation of lowing the window glass **3** to a safe position, an operation of warning an operator by sound or light from an alarm device installed inside the vehicle, and a combination thereof.

The control unit **5** is further provided with a command cancellation unit **53** which cancels a command from the switch **24** when the blocked state is detected by the detection unit **51** after a command to move the window glass **3** is issued from the switch **24** but before the window glass **3** starts to move. Since the command cancellation unit **53** is provided, the window glass **3** does not move during when the blocked state is detected, and safety is thus further improved. The command cancellation unit **53** is one aspect of the command cancellation means of the invention.

Next, specific configurations, etc., of the camera **7** and the detection line **6** will be described.

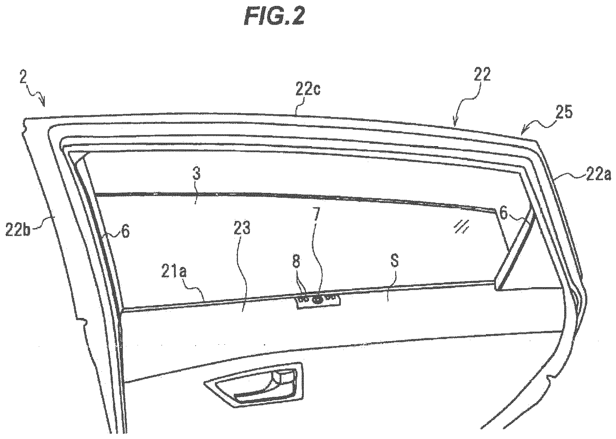

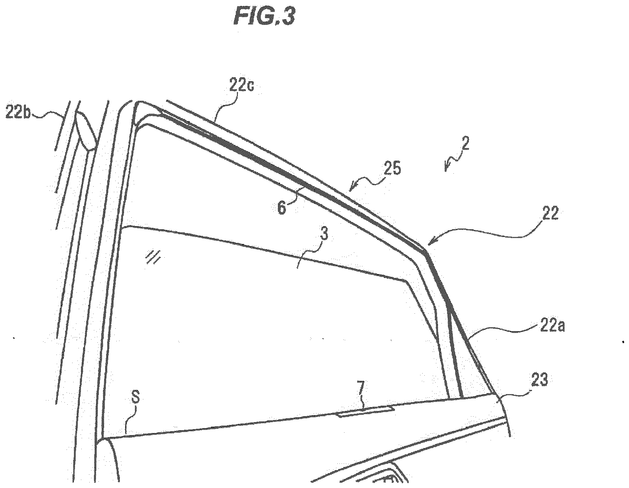

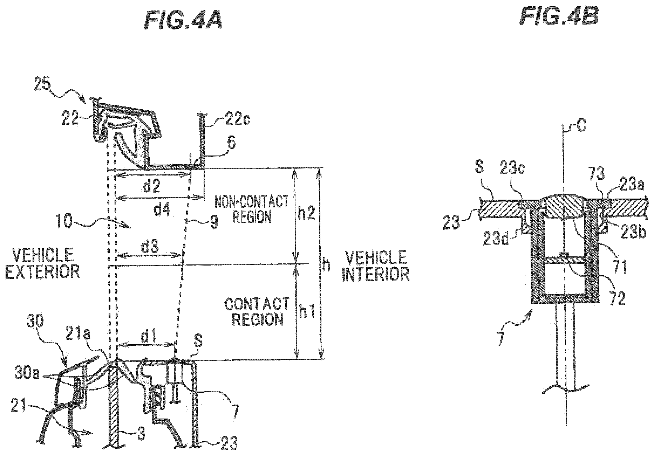

**FIG.2** is an explanatory diagram illustrating the door **2** when viewed from the upper side inside a vehicle, **FIG.3** is an explanatory diagram illustrating the door **2** when viewed from the lower-front side of the vehicle, **FIG.4A** is an explanatory diagram illustrating the positions and alignment of the camera **7** and a detection line **6,** and **FIG.4B** is an enlarged view of **FIG.4A** showing the portion provided with the camera.

As shown in **FIGS.2** to **4B**, in the vehicle window glass raising/lowering device **1** of the present embodiment, the camera **7** has an optical system **71** including at least one lens and an image pickup device **72** onto which a subject image is focused by the optical system **71,** and the optical system **71** is arranged at a position corresponding to an opening **23**a formed on an upper surface S of the door trim **23** so that an optical axis C of the optical system **71** passes through the opening **23**a.

In other words, in the present embodiment, the camera **7** is provided on the upper surface S of the door trim **23.** The upper surface S of the door trim **23** here is an outer surface of the door trim **23** at a top edge portion and is a surface which is visible from above in a vertical direction. The upper surface S of the door trim **23** may be inclined with respect to the vehicle width direction (horizontal direction). The door trim **23** is generally curved such that the upper surface S has the highest portion in the vicinity of the window glass **3,** i.e., in the vicinity of an exit slot **21**a allowing the window glass **3** to come out from the storage portion **21,** and slopes down as a distance from the window glass **3** increases. Thus, the upper surface S of the door trim **23** is an outer surface of the door trim **23** (a portion corresponding to a lower surface of the window frame **25)** in the vicinity of the window glass 3 (the exit slot **21**a).

The opening **23**a is formed on the vehicle interior side with respect to the exit slot **21**a, and the optical system **71** of the camera **7** is arranged so that the optical axis C is located on the vehicle interior side with respect to the exit slot **21**a. Although the camera **7** in this example is arranged so that the optical axis C of the optical system **71** coincides with the vertical direction when viewed in the cross section in **FIG.4A****,** the optical axis C of the optical system **71** may be inclined with respect to the vertical direction in the front-back direction of the vehicle or in the vehicle width direction, and can be appropriately adjusted according to the installed position or desired imaging range of the camera 7.

In the present embodiment, the camera **7** is arranged in a hole **23**b provided on the upper surface S of the door trim **23** at the center in the front-back direction of the vehicle (at the center of the upper surface S of the door trim **23** on a side facing the window glass **3).** However, the position of providing the camera **7** is not limited thereto and may be shifted toward the front or rear of the vehicle.

The camera **7** has a columnar shape as a whole and has a flange **73** which is formed at a top end so as to protrude radially outward. The camera **7** is inserted into the hole **23**b from above the door trim **23** and is fixed to the door trim **23** by arranging the flange **73** so as to be housed in a recess **23**c formed at a circumferential edge of the hole **23**b and engaging a locking pawl **23**d, which is provided at a lower circumferential edge of the hole **23**b, with a groove (not shown) provided on the camera **7.** Although the top end face of the camera **7** is flush with the upper surface S of the door trim **23** in this example, the top end face of the camera **7** may protrude upward from the upper surface S of the door trim **23** or may be located below the upper surface S of the door trim **23.** In addition, although the camera **7** in this example is arranged so that a portion of the optical system **71** is located above the opening **23a,** the camera **7** may be arranged so that the optical system **71** is located below the opening **23**a**.** In addition, the structure for fixing the camera 7 to the door trim **23** and the direction to insert the camera **7** are not specifically limited and can be appropriately changed.

The camera **7** is desirably configured to capture an image of the detection line **6** which extends along at least an upper rim portion of the window glass **3,** which is a portion of an outer rim of the window glass **3** and the closing end for the window glass **3,** in the state that the door **2** and the window glass **3** are closed. In other words, the camera **7** is desirably configured to capture an imagen of the detection line **6** which is continuously provided on the frame portion **22** so as to extend along at least a portion of the rear upright portion **22**a**,** the entire upper extended portion **22**c and at least a portion of the front upright portion **22**b. This is because pinching between the window glass **3** and the window frame **25** is most likely to occur at the closing end for the window glass **3,** i.e., at the upper extended portion **22**c, and also at the top ends of the rear upright portion **22**a and the front upright portion **22**b.

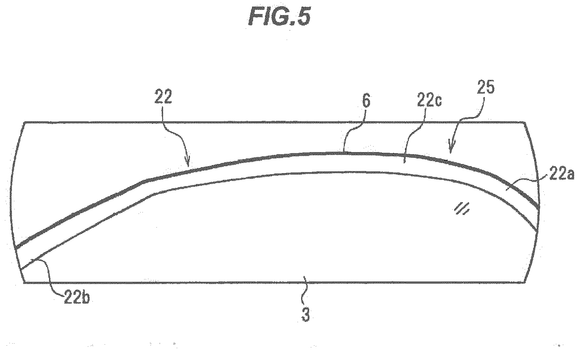

Furthermore, the camera **7** is desirably configured so that the imaging range (a viewing angle) thereof covers the entire moving area of the window glass **3.** In detail, in case that the window glass **3** is configured to be completely retracted, the viewing angle of the camera **7** desirably covers the range from the vertically upper portion to the lower end of the rear upright portion **22**a on the rear side of the vehicle and from the vertically upper portion to the lower end of the front upright portion **22**b on the front end of the vehicle. Meanwhile, in case that the window glass **3** is configured to not be completely retracted, the viewing angle of the camera **7** desirably covers the range from the vertically upper portion to an intersection formed between the rear upright portion **22**a and the upper edge (upper rim) of the window glass **3** which is located at the lowest position, and the range on the front side of the vehicle from the vertically upper portion to an intersection formed between the front upright portion **22**b and the upper edge (upper rim) of the window glass **3** which is located at the lowest position. An example of an image captured by the camera **7** (an image after trimming) is shown in **FIG.5****.**

Although the imaging range (the viewing angle) of the camera **7** set to cover the entire moving area of the window glass **3** has been described in this example, it is not limited thereto if this causes inconvenience. That is, the imaging range (the detection region) may be set to exclude a region in which a part of human body, etc., is likely to be located between the camera **7** and the detection line **6** in the normal use and inconvenience is caused. The details will be described later.

It is desirable to use a wide-angle lens as the optical system **71** of the camera **7** so that a foreign object can be detected in the range described above. The optical system **71** used in this example is formed by combining plural ultra wide-angle lenses so as to have a viewing range of not less than **180°,** or **190°** taking into account the installation precision, in the front-back direction of the vehicle.

Meanwhile, to quickly detect the foreign object, the frame rate of the image pickup device **72** used is desirably as high as possible. In the present embodiment, a CMOS (Complementary MOS) image sensor is used as the image pickup device **72.**

The detection line **6** is provided along the frame portion **22** on the vehicle interior side with respect to the window glass **3.** To cover the region in which pinching by the window glass **3** is likely to occur, the detection line **6** is desirably provided along at least an edge of an upper portion of the window frame **25** which is a closing end for the window glass **3.** That is, the detection line **6** is desirably provided continuously along at least a portion of the rear upright portion **22**a, the entire upper extended portion **22**c and at least a portion of the front upright portion **22**b. In the present embodiment, the detection line **6** is provided along the entire frame portion **22** on the vehicle interior side at a distance from the window glass **3.**

The detection line **6** may be provided on either the door **2** or the vehicle body as long as it is provided along the window frame **25.** For example, in a vehicle in which a distance d**4** between the window glass **3** and an edge (an end face) of the frame portion **22** on the vehicle interior side (see **FIG.4A****)** is small, the detection line **6** may be provided on the vehicle body to provide a sufficient distance between the detection line **6** and the window glass **3**. The detection line **6** may not be continuous, and can be provided partially on the door **2** and partially on the vehicle body. It is noted that the claimed invention only covers the embodiments, wherein the whole detection line 6 is provided on the vehicle door.

In the present embodiment, the detection line **6** provided on the door **2** is described as an example. In this case, the detection line **2** is provided on the inner circumferential surface of the entire frame portion **22,** i.e., the inner surfaces of all the rear upright portion **22**a**,** the front upright portion **22**b and the upper extended portion **22**c, on the vehicle interior side at a distance from the window glass **3.** The inner circumferential surface of the frame portion **22** here is a surface of the frame portion **22** facing the window glass **3** and is composed of a surface of the rear upright portion **22**a on the front side of the vehicle, a surface of the front upright portion **22**b on the rear side of the vehicle and a surface of the upper extended portion **22**c on the lower side. In other words, the inner circumferential surface of the frame portion **22** is a part of an outer surface of the frame portion **22** in the vicinity of the window glass **3.**

The light source **8** is configured such that the entire detection line **6** is exposed to radiation. Although four light sources **8** are used in this example to emit infrared radiation onto the detection line **6** provided on the entire inner surface of the frame portion **22,** the number of the light sources **8** is not limited thereto. In addition, although the light sources **8** in this example are arranged on the upper surface of the door trim **23** in the vicinity of the camera **7,** the positions of the light sources **8** are not limited thereto. For example, the light sources **8** may be arranged on the inner surface of the frame portion **22.**

The detection line **6** is formed so that brightness under infrared radiation is different from surrounding members. For example, when a metal (sheet metal) constituting the door **2** and a rubber member (waist) on the vehicle body are adjacent to each other in the state that the door **2** is closed, a boundary therebetween (i.e., a boundary between the door **2** and the vehicle body) can be used as the detection line **6.** Meanwhile, when the inner circumferential surface of the frame portion **22** is formed of a resin, a line formed by providing a recess on a portion of the resin so as to have a different infrared reflectance from the surroundings can be used as the detection line **6.** However, it is not limited thereto. The detection line **6** may be formed by applying a highly infrared reflective paint to the inner surface of the frame portion **22,** or may be an existing member of which brightness under infrared radiation is different from surroundings. The same applies to when the detection line **6** is provided on the vehicle body.

In the present embodiment, the pinch prevention operation is also performed when the blocked state is detected during when the window glass **3** is moving down. This is to prevent a part of human body such as finger from being dragged into the exit slot **21**a during when the window glass **3** is moving down. A weather strip **30** having a lip seal **30**a slidably in contact with the window glass **3** is provided around the exit slot **21**a to prevent ingress of water, etc., into the storage portion **21** (an internal space of the door **2).** When the window glass **3** is lowered, clothing or a part of human body such as finger may be dragged, together with the lip seal **30**a, into the storage portion **21**. In the present embodiment, it is possible to prevent such dragging and thereby to further improve safety. Here, an operation of moving down the window glass **3** is not included in the pinch prevention operation which is performed when the blocked state is detected during when the window glass **3** is moving down.

A detection surface **9** described hereinafter is a plane formed by connecting points between the optical system **71** of the camera **7** and the detection line **6** at which the foreign object when located thereon causes the blocked state. The detection surface **9** is substantially the same as a plane connecting the center of the optical system **71** (the center in the vehicle width direction, the height direction and the front-back direction of the vehicle) to the detection line **6,** although depending on the specific configuration of the optical system **71**. The detection surface **9** does not needs to be an entirely continuous plane. For example, when the detection line **6** is not continuous, the detection surface **9** is composed of plural planes. Meanwhile, in case that the detection line **6** is composed of dots, lines are formed when connecting points between the optical system **71** of the camera **7** and the detection line **6** at which a foreign object when located thereon causes the blocked state, and such lines are also included as the detection surface **9.** When the detection surface **9** is composed of plural planes or lines, a distance between adjacent planes or lines is desirably not more than at least a thickness of young child's finger (e.g., **4** mm) to ensure safety.

As shown in **FIG.4A****,** in the present embodiment, the minimum distance in the vehicle width direction between the detection surface **9** and the inner surface of the window glass **3** is smaller at the lower edge of the detection surface **9** than at the upper edge of the detection surface **9.** In other words, a space **10** between the detection surface **9** and the window glass **3** is formed such that the minimum width in the vehicle width direction is smaller at the lower edge of the detection surface **9** than at the upper edge of the detection surface **9.**

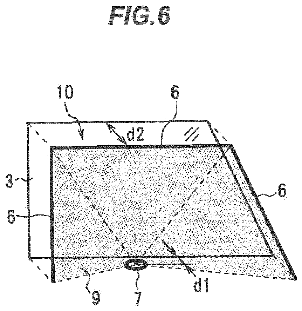

The detection surface **9** schematically shown as an example in **FIG.6** is formed when a distance d**2** in the vehicle width direction between the detection line **6** and the window glass **3** is constant. A plane shown as a hatched area in **FIG.6** is the detection surface **9.** However, **FIG.6** is only one example, and the distance d**2** between the detection line **6** and the window glass **3** does not need to be constant.

As shown in **FIGS.4A**, **4B** and **6**, the detection surface **9** as a whole has a substantially semi funnel-shape of which a distance from the window glass **3** increases from the camera **7** to the detection line **6**. In this case, the minimum distance in the vehicle width direction between the detection surface **9** and the inner surface of the window glass **3** at the lower edge of the detection surface **9** is equal to a distance d**1** in the vehicle width direction between the camera **7** and the window glass **3** (a distance in the vehicle width direction between the center of the optical system **71** and the window glass **3**), and the minimum distance in the vehicle width direction between the detection surface **9** and the inner surface of the window glass **3** at the upper edge of the detection surface **9** is equal to the distance d**2** in the vehicle width direction between the detection line **6** and the window glass **3**. In this case, the distance d**2** in the vehicle width direction between the detection line **6** and the window glass **3** is set to be larger than the distance d**1** in the vehicle width direction between the camera **7** and the window glass **3**.

Meanwhile, the maximum distance in the vehicle width direction between the detection surface **9** and the inner surface of the window glass **3** at the lower edge of the detection surface **9** is desirably not more than the maximum distance in the vehicle width direction between the detection surface **9** and the inner surface of the window glass **3** at the upper edge of the detection surface **9**. This is because having a large distance in the vehicle width direction between the detection surface **9** and the inner surface of the window glass **3** at the lower edge of the detection surface **9** leads to a decrease in user convenience. That is, as a whole, the detection surface **9** is formed to be close to the window glass **3** on the lower side and far from the window glass **3** on the upper side.

As described above, pinching by the window glass **3** is likely to occur at the closing end of the window frame **25**, i.e., in an upper region of the space **10**. Therefore, even when the distance d**1** between the camera **7** and the window glass **3** is small, the pinch prevention operation can be performed before contact between a foreign object and the window glass **3** in a region in which pinching by the window glass **3** is likely to occur, as long as a sufficiently large distance is provided between the window glass **3** and the detection surface **9** in the upper region of the space **10**.

Meanwhile, in the present embodiment, since the distance between the window glass **3** and the detection surface **9** is small in a lower region of the space **10** (particularly in a region close to the camera **7**), a foreign object may come into contact with the moving window glass **3** even if the pinch prevention operation is performed after detecting the foreign object. In the lower region of the space **10**, there is a possibility that the foreign object comes into contact with the moving window glass **3**, but it is unlikely that the foreign object gets pinched by the window glass **3** since the pinch prevention operation is performed immediately after the foreign object comes into contact with the window glass **3**.

Hereinafter, the upper region of the space **10** is referred to as a non-contact region where the pinch prevention operation can be triggered before a foreign object advancing therein comes into contact with the window glass **3,** and the lower region of the space **10** is referred to as a contact region where the foreign object advancing therein may come into contact with the window glass **3** before performing the pinch prevention operation.

Meanwhile, the minimum distance (a distance from the inner surface of the window glass **3** in the vehicle width direction) at which the pinch prevention operation can be performed before contact between the advancing foreign object and the window glass **3** is calculated by taking into account the anticipated advancing speed of the foreign object, the frame rate of the camera **7,** the operating speed of the control unit **5** (time that elapses from when the image is captured to when it is judged that the foreign object enters) and the speed that the drive mechanism **4** stops the movement of the window glass **3** (the time that elapses before the window glass **3** stops). This minimum distance is referred to as a safe distance d**3**. The distance in the vehicle width direction between the detection surface **9** and the window glass 3 is not less than the safe distance d**3** in the non-contact region and is less than the safe distance d**3** in the contact region.

For example, given that the frame rate of the camera **7** is **400** fps (frame per second, **2.5** ms per frame), the time that elapses from when the image is captured to when it is judged that the foreign object enters is **10** ms (on the assumption that the brightness correction process, etc., requires up to **7.5** ms and the foreign object detection process requires **2.5** ms) and the time for stopping the window glass **3** is **20** ms, the window glass **3** is stopped **30** ms after the image is captured. In this case, given that the advancing speed of the foreign object is **1** m/s, the foreign object travels **30** mm in **30** ms and the safe distance d**3** is thus **30** mm. The advancing speed of the foreign object is **1** m/s in this example, but may be estimated to be **0.5** m/s in view of preventing, e.g., a part of elderly person's body, etc., from being pinched, and the safe distance d**3** in this case is **14.5** mm. In addition, when the frame rate of the camera **7** in such case is increased to **1000** fps (1 ms per frame), the safe distance d**3** is **24** mm As such, the safe distance d**3** is different depending on, e.g., required safety or performance of the used member (the camera **7** or the drive mechanism **4,** etc.).

When a height h of the window frame **25** (a distance between the lower surface of the upper extended portion **22**c and the upper surface of the door trim **23**) is expressed as a sum of a height h**2** of the non-contact region and a height h**1** of the contact region, it is desirable that the height h**2** of the non-contact region be as large as possible and the height h**1** of the contact region as small as possible to ensure higher safety.

In detail, judging from the pinching accidents actually occurred, serious accidents occur especially when a head of child of three years of age gets caught by the window glass **3**. Considering that an average head height of three-year-old children is **191** mm, the height h2 of the non-contact region is desirably at least not less than **200** mm. Furthermore, the height h**2** of the non-contact region is desirably not less than **1**/**2** of the height h of the window frame **25** so that the height h**2** of the non-contact region is larger than the height h**1** of the contact region.

When the window glass **3** is formed in a plate shape which is not curved as shown in **FIGS.4A**, **4B** and **6**, the width of the space **10** in the vehicle width direction between the detection surface **9** and the window glass **3** gradually increases from the lower edge of the detection surface **9** toward the upper edge when viewed in the cross section including the camera **7**. In such a case, when a distance in the vehicle width direction between the detection surface **9** and the window glass **3** at the center of the window frame **25** in the height direction is adjusted to not less than the safe distance d**3**, the height h**2** of the non-contact region can be not less than **1**/**2** of the height h of the window frame **25**. In detail, when, for example, the safe distance d**3** is **30** mm and the distance d**1** in the vehicle width direction between the camera **7** and the window glass **3** is **15** mm, the distance d**2** in the vehicle width direction between the detection line **6** and the window glass **3** is adjusted to not less than **45** mm so that the distance in the vehicle width direction between the detection surface **9** and the window glass **3** at the center of the window frame **25** in the height direction can be not less than the safe distance d**3** and the height h**2** of the non-contact region can be not less than **1**/**2** of the height h of the window frame **25**.

In this case, in a vehicle of which window frame **25** has the height h of **400** mm, an inclination of the detection surface **9** with respect to the vertical direction is **4.29**° when viewed in the cross section including the camera **7.** Since the distance between the detection surface **2** and the window glass **3** at the lower edge of the detection surface **9** is not less than distance d**1** (15 mm) and not more than the distance **d2** as shown in **FIG.6**, the inclination of the detection surface **9** with respect to the vertical direction in this case is in the range from **0**° to **4.29**°. However, the inclination of the detection surface **9** with respect to the vertical direction here is only an example and this inclination varies depending on the distance d**2** or the height h of the window frame **25**, etc.

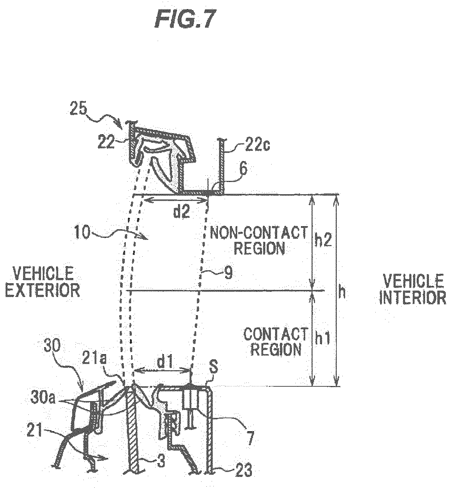

Although the window glass **3** having a plate shape and not curved has been described in this example, the window glass **3** in some cases can be curved and convex toward the vehicle exterior side as shown in **FIG.7**. In this case, the width of the upper region of the space **10** in the vehicle width direction may be gradually reduced toward the upper edge of the detection surface **9**. To adjust the height h**2** of the non-contact region to be not less than **1**/**2** of the height h of the window frame **25** in such a case, the width of the space **10** in the vehicle width direction needs to be not less than the safe distance d3 at least from the center of the height h of the window frame **25** to the top.

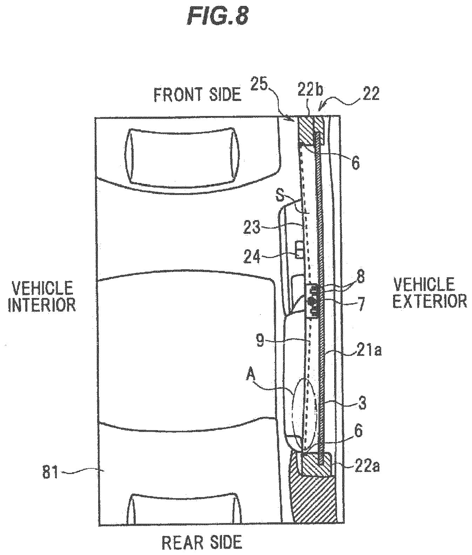

In the meantime, when the distance d**2** in the vehicle width direction between the detection line **6** and the window glass **3** is constant, the detection surface **9** is as shown in **FIG.8** when viewed from above. In vehicle, since a seat **81** is generally arranged at a position below the window glass **3** on the rear side as shown in **FIG.8**, a part of the passenger's body such as shoulder, etc., is likely to be located in a region of the detection surface **9** on a lower-rear side of the vehicle (a region A surrounded by a dot-and-dash line in the drawing) and this could cause a decrease in convenience. It is considered that such decrease in convenience is significant particularly when the detection line **6** is formed on the vehicle body.

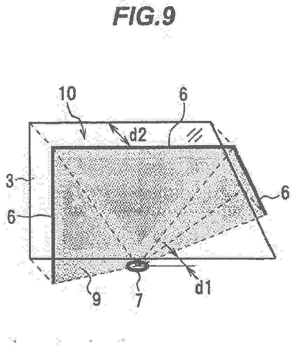

When such problem of decrease in convenience occurs, the detection line **6** on the lower portion of the rear upright portion **22**a is omitted so that the detection surface **9** is formed in a region facing the window glass **3** in the vehicle width direction excluding a region on the lower-rear side of the vehicle, as shown in **FIG.9****.** In this configuration, a foreign object is not detected in a region in which a part of human body, etc., is likely to come close to the window glass **3,** i.e., in a region in which detection causes inconvenience, but a foreign object is detected in a region on the upper-rear side of the vehicle. Therefore, it is possible to prevent pinching and a resulting load on human body, and thereby possible to ensure safety.

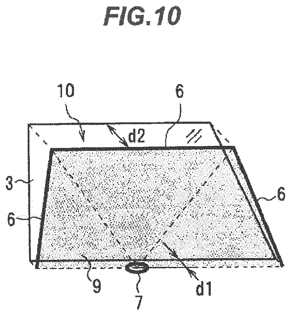

Alternatively, as shown in **FIG.10**, the detection line **6** provided on the rear upright portion **22**a and the front upright portion **22**b (the detection line **6** provided on the front and rear sides in the front-back direction of the vehicle) may be inclined in such a manner that a distance from the window glass **3** is reduced toward a lower end, so that the detection surface **9** is closer to the window glass **3** in a lower region in which a part of human body, etc.. is likely to come close to the window glass **3**.

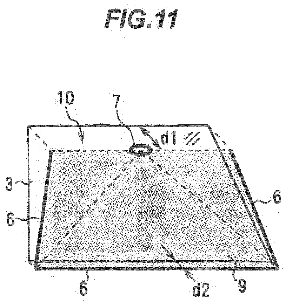

In addition, although the camera **7** provided on the door **2** has been described in the present embodiment, the camera **7** can be provided on the vehicle body. The camera **7** can be provided on, e.g., an interior ceiling of the vehicle. That is, the optical system **71** of the camera **7** may be arranged at a position corresponding to an opening formed on the interior ceiling of the vehicle so that the optical axis of the optical system **71** passes through the opening, where the opening is located in the vicinity of the window glass **3** in the state that the door **2** and the window glass **3** are closed. In this case, the camera **7** is arranged at a position relatively far from the window glass **3** as shown in **FIG.11**, but it is possible to ensure safety while improving convenience when the detection line **6** provided on the upper surface S of the door trim **23** and the detection line **6** provided on the lower portions of the rear upright portion **22**a and the front upright portion **22**b are close to the window glass **3**. It is noted that the claimed invention only covers embodiments wherein the camera 7 is provided on the door 2. Embodiments wherein the camera 7 is e.g. provided on the vehcile ceiling are not covered by the claimed invention.

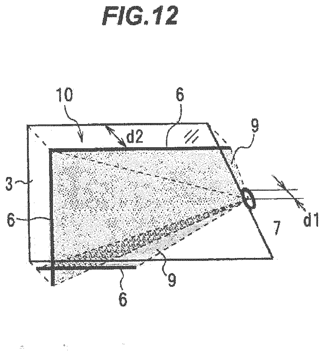

Furthermore, for the purpose of not forming the detection surface **9** in a region which is unwanted in view of improvement in convenience (an unwanted region) and faces, in the vehicle width direction, a region of the window glass **3** on the lower-rear side of the vehicle, the camera 7 may be provided on the rear upright portion **22**a at a position corresponding to an upper end of the unwanted region (or at such position on the vehicle interior) as shown in **FIG.12****.** In this case, it is possible to form the detection surface **9** substantially the same as that shown in **FIG.9****,** and it is possible to ensure safety while convenience is improved by eliminating the unwanted region. Although **FIG.12** shows an example in which the detection line **6** is also provided on a portion of the upper surface S of the door trim **23** on the front side of the vehicle, the detection line **6** on the upper surface S of the door trim **23** can be omitted.

Next, a control flow of the vehicle window glass raising/lowering device **1** will be described.

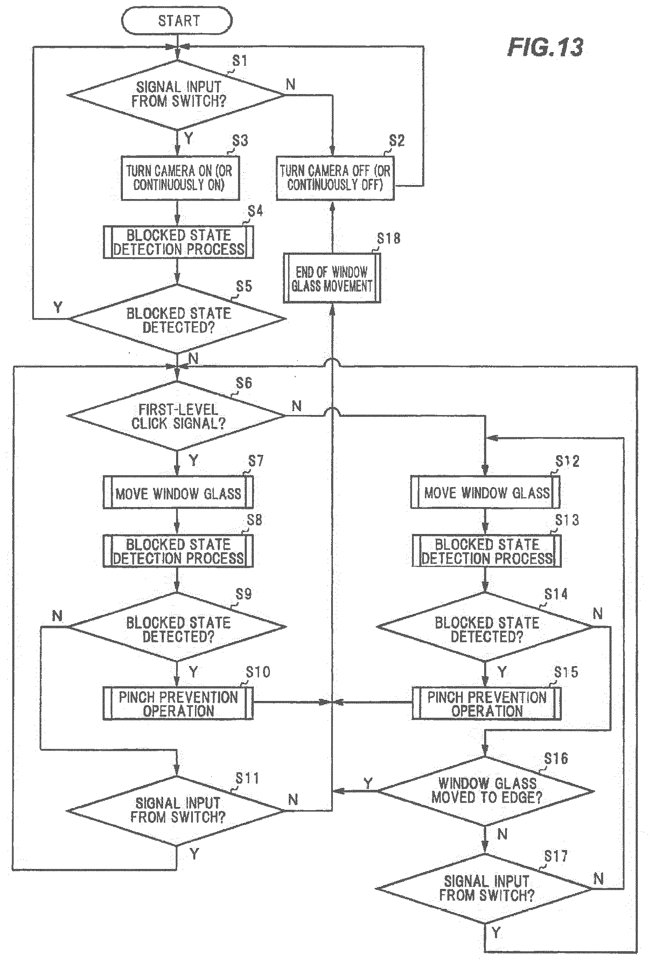

As shown in **FIG.13**, the vehicle window glass raising/lowering device **1** is configured such that the control unit **5** firstly judges whether or not a signal is input from the switch **24** at **Step S1.** If judged as NO at Step S**1**, the control unit **5** controls the camera **7** to be turned off (or kept in the off-state) at Step **S2** and the flow is allowed to return to Step **S1.** If the light sources **8** are turned on at this stage, the light sources **8** are also turned off at Step S**2**, though it is not shown in the drawing.

If judged as YES at Step S**1**, the control unit **5** controls the camera **7** to be turned on (or kept in the on-state) at Step **S3** and the flow is allowed to proceed to Step S**4**. If the illumination intensity to capture an image by the camera **7** is not enough, the light sources **8** are turned on at Step S**3**, though it is not shown in the drawing.

At Step S**4,** the detection unit **51** (i.e., the image processing section **51**a and the blocked state determination section **51b**) performs a processing of detecting the blocked state (i.e., a blocked state detection processing) based on the image captured by the camera **7.** After that, at Step S**5,** the command cancellation unit **53** judges whether or not the blocked state is detected by the detection unit **51**.

If judged as YES at Step S**5**, the command cancellation unit **53** determines that there is a risk of being pinched by the window glass **3** and the flow is allowed to return to Step S**1** without moving the window glass **3** (i.e., the signal from the switch **24** is cancelled).

If judged as NO at Step S**5**, the control unit **5** judges whether or not the signal input from the switch **24** is a first-level click signal (a first-level move-down click signal or a first-level move-up click signal) at Step S**6.**

If judged as YES at Step S**6**, the control unit **5** instructs the drive mechanism **4** to control the movement of the window glass **3** at Step S**7**.

After that, at Step S**8**, the detection unit **51** performs a processing of detecting the blocked state (i.e., a blocked state detection processing) based on the image captured by the camera **7.** After that, at Step S**9**, the pinching prevention unit **52** judges whether or not the blocked state is detected by the detection unit **51**.

If judged as YES at Step S**9**, there is a risk of being pinched by the window glass **3.** Accordingly, the pinching prevention unit **52** performs a pinch prevention operation such as halting the movement of the window glass **3** or lowering the window glass 3 to the safe position at Step S**10**. After that, the control unit **5** terminates the movement of the window glass **3** at Step S**18** and the flow is allowed to return to Step S**2**. As describe above, in the present embodiment, if the blocked state is detected while the first-level click signal is being input from the switch **24**, the movement of the window glass **3** is terminated after performing the pinch prevention operation.

If judged as NO at Step S**9**, there is no risk of being pinched by the window glass **3**. Accordingly, the control unit **5** judges whether or not a signal is input from the switch 24 at Step S**11**. If judged as NO at Step S**11**, this means that an operation on the switch **24** is finished. Accordingly, the control unit **5** terminates the movement of the window glass **3** at Step S**18** and the flow is allowed to return to Step S**2**. If judged as YES at Step S**11**, the flow is allowed to return to Step S**6** and the window glass **3** is kept moving.

On the other hand, if judged as NO at Step S**6**, i.e., if a second-level click signal (a second-level move-down click signal or a second-level move-up click signal) is input from the switch **24,** the control unit **5** instructs the drive mechanism **4** to control the movement of the window glass **3** at Step S**12**.

After that, at Step S**13**, the detection unit **51** performs a processing of detecting the blocked state (i.e., a blocked state detection processing) based on the image captured by the camera **7.** After that, at Step S**14**, the pinching prevention unit **52** judges whether or not the blocked state is detected by the detection unit **51.**

If judged as YES at Step S**14**, there is a risk of being pinched by the window glass **3.** Accordingly, the pinching prevention unit **52** performs a pinch prevention operation at Step S**15**. After that, the movement of the window glass **3** is terminated at Step S**18** and the flow is allowed to return to Step S**2**. In other words, in the present embodiment, if the second-level click signal is input from the switch **24** and the blocked state is detected during when the window glass **3** is moving, the movement of the window glass **3** is terminated after performing the pinch prevention operation.

If judged as NO at Step S**14**, there is no risk of being pinched by the window glass **3.** Accordingly, the control unit **5** judges whether or not the window glass **3** is moved to an edge (to the top or bottom end) at Step S**16**. If judge as YES at Step S**16**, the control unit **5** terminates the movement of the window glass **3** at Step S**18** and the flow is allowed to return to Step S**2**. Meanwhile, the positional information of the window glass **3** may be obtained by using a rotational pulse generated by a Hall IC incorporated in the motor **41,** or using current ripple.

If judged as at Step S**16**, it is judged whether or not a new signal is input from the switch **24** (i.e., whether or not a new signal is input after the second-level click signal is input) at Step S**17**. If judged as YES at Step S**17**, the flow is allowed to return to Step S**6**. If judged as NO at Step S**17**, the flow is allowed to return to Step S**12** and the window glass **3** is kept moving. That is, if the second-level click signal is input, the window glass **3** is kept moving until the blocked state is detected, the window glass **3** is moved to an edge or a new signal is input from the switch **24.**

### (Functions and Effects of the embodiment)

As described above, the vehicle window glass raising/lowering device **1** in the present embodiment is configured such that the detection surface **9** is defined as a surface generated by successively arranging positions between the optical system **71** and the detection line **6** for causing the blocked state when a foreign object is located thereat, and the minimum distance in the vehicle width direction between the detection surface **9** and the inner surface of the window glass **3** at the lower edge of the detection surface **9** is smaller than the minimum distance in the vehicle width direction between the detection surface **9** and the inner surface of the window glass **3** at the upper edge of the detection surface **9.**

In this configuration, since the distance between the window glass **3** and the detection surface **9** is large in an upper region in which pinching by the window glass **3** is likely to occur, it is possible to perform a pinch prevention operation before a foreign object makes contact. Meanwhile, since the distance between the window glass **3** and the detection surface **9** is small in a lower region in which a part of passenger's body, etc., is likely to come close to the window glass **3** in normal use, it is possible to prevent such a problem that the pinch prevention operation is performed despite no risk of getting pinched by the window glass **3** and the window glass **3** cannot be moved even when intended to move, hence, convenience is improved. As a result, both safety and convenience can be achieved even in, e.g., vehicles with a thin door trim **23,** such as compact car classed as a small size vehicle.

### (Summary of the embodiment)

Technical ideas understood from the embodiment will be described below citing the reference numerals, etc., used for the embodiment. However, each reference numeral, etc., described below is not intended to limit the constituent elements in the claims to the members, etc., specifically described in the embodiment.

The invention can be appropriately modified and implemented without departing from the scope defined by the appended claims. For example, although it is not mentioned in the embodiment, the vehicle window glass raising/lowering device **1** may be provided with a safety device which monitors the rotational speed of the motor **41**, determines that a foreign object is pinched by the window glass when the rotational speed of the motor **41** is reduced, and performs various safety operations such as automatic lowering of the window glass **3** by reversing its movement direction.

In addition, although the invention is applied to a rear door **2** of vehicle in the embodiment, it is not limited thereto. The invention is also applicable to front doors of vehicle.

Furthermore, the invention is applied to the door **2** having the frame portion **22** in the embodiment, but is also applicable to doors of hardtop which do not have the frame portion **22** on the door **2** side.

### [Industrial Applicability]

The invention is applicable to a vehicle window glass raising/lowering device which is provided with a mechanism to prevent pinching by an automatically raising window glass.

### [Reference Signs List]

- **1**: VEHICLE WINDOW GLASS RAISING/LOWERING DEVICE
- **2**: DOOR (VEHICLE DOOR)
- **3**: WINDOW GLASS
- **4**: DRIVE UNIT
- **5**: CONTROL UNIT
- **6**: DETECTION LINE
- **7**: CAMERA
- **9**: DETECTION SURFACE
- **21**: STORAGE PORTION
- **22**: FRAME PORTION
- **23**: DOOR TRIM
- **23**a: OPENING
- **25**: WINDOW FRAME
- **51**: DETECTION UNIT (DETECTION MEANS)
- **52**: PINCHING PREVENTION UNIT (PINCHING PREVENTION MEANS)

## Claims

1. A vehicle door (2) comprising:
a storage portion (21) comprising a window glass (3); and
a vehicle window glass raising/lowering device (1),
wherein the vehicle window glass raising/lowering device (1), comprises:
a drive mechanism (4) arranged on the vehicle door (2) to vertically move the window glass;
a control unit (5) for controlling the drive mechanism (4);
a detection line (6) provided on the vehicle interior side of the vehicle door (2) with respect to the window glass (3), the detection line being along at least a part of the outer edge of the window glass (3) in a state that the door and the window glass are closed; and
a camera (7) provided on the vehicle door for capturing an image of the detection line (6),
wherein the camera (7) comprises an optical system including at least one lens and an image pickup device onto which a subject image is focused by the optical system,
wherein the control unit (5) comprises a detection means (51) for detecting a blocked state in which the detection line captured in an image by the camera (7) is at least partially blocked by a foreign object, and a pinching prevention means (52) that causes the drive mechanism (4) to perform a pinch prevention operation for preventing pinching by the window glass (3) when the blocked state is detected by the detection means during when the window glass (3) is moved by the drive mechanism,
**characterised in that**
a minimum value in a vehicle width direction of a distance between a detection surface (9) and an inner surface of the window glass (3) at a lower edge of the detection surface is smaller than a minimum value in the vehicle width direction of a distance between the detection surface and the inner surface of the window glass at an upper edge of the detection surface (9), and
wherein the detection surface (9) is defined as a surface generated by successively arranging positions between the optical system and the detection line (6) for causing the blocked state when the foreign object is located thereat.

2. The vehicle door (2) according to claim **1,** wherein the optical system is arranged at a position corresponding to an opening formed on an upper surface of a door trim so that an optical axis of the optical system passes through the opening, the door trim being attached on a vehicle interior side of the storage portion (21), and the detection line (6) is provided along at least an upper portion of the outer edge of the window glass (3) in the state that the door (2) and the window glass (3) are closed, the upper portion being a closing end for the window glass (3).

3. The vehicle door (2) according to claim **2,** wherein a distance in the vehicle width direction between the detection line and the window glass (§) is larger than a distance in the vehicle width direction between the camera and the window glass.

4. The vehicle door (2) according to any one of claims **1** to 3, further comprising light sources that emit infrared radiation toward detection line,
wherein the camera (7) comprises an infrared camera that captures the infrared radiation emitted from the light sources and reflected by the detection line.

5. The vehicle door (2) according to any one of claims 1 to 4, wherein the control unit (5) further comprises a command cancellation means that cancels a command for moving the window glass (3) when the blocked state is detected by the detection means (51) after issuing the command and before starting movement of the window glass.

6. A vehicle, comprising the vehicle door (2) according to any one of claims 1 to 5.

7. The vehicle according to claim 6,
wherein the detection surface (9) is formed in a region facing the window glass (3) in the vehicle width direction excluding a region on a lower-rear side of the vehicle

## Patentansprüche

1. Fahrzeugtür (2) mit:
einen Aufbewahrungsabschnitt (21) mit einer Fensterscheibe (3); und
eine Vorrichtung (1) zum Heben und Senken der Fahrzeugfensterscheibe,
wobei die Fahrzeugscheiben-Hebe-/Senkvorrichtung (1) Folgendes umfasst:
einen Antriebsmechanismus (4), der an der Fahrzeugtür (2) angeordnet ist, um die Fensterscheibe vertikal zu bewegen;
eine Steuereinheit (5) zur Steuerung des Antriebsmechanismus (4);
eine Erfassungslinie (6), die an der Fahrzeuginnenseite der Fahrzeugtür (2) in Bezug auf das Fensterglas (3) angebracht ist, wobei die Erfassungslinie in einem Zustand, in dem die Tür und das Fensterglas geschlossen sind, entlang mindestens eines Teils der Außenkante des Fensterglases (3) verläuft; und
eine Kamera (7), die an der Fahrzeuginnenseite der Fahrzeugtür angebracht ist, um ein Bild der Erfassungslinie (6) zu erfassen,
**dadurch gekennzeichnet, dass**
die Kamera (7) ein optisches System umfasst, das mindestens eine Linse und eine Bildaufnahmevorrichtung enthält, auf die ein Subjektbild durch das optische System fokussiert wird,
wobei die Steuereinheit (5) ein Erfassungsmittel (51) zum Erfassen eines blockierten Zustands, in dem die in einem Bild durch die Kamera (7) erfasste Erfassungslinie zumindest teilweise durch einen Fremdkörper blockiert ist, und ein Einklemmverhinderungsmittel (52) umfasst, das den Antriebsmechanismus (4) veranlasst,
einen Einklemmverhinderungsvorgang durchzuführen, um ein Einklemmen durch die Fensterscheibe (3) zu verhindern, wenn der blockierte Zustand durch das Erfassungsmittel erfasst wird, während die Fensterscheibe (3) durch den Antriebsmechanismus bewegt wird,
wobei ein Mindestwert in einer Fahrzeugbreitenrichtung eines Abstands zwischen einer Erfassungsfläche (9) und einer Innenfläche der Fensterscheibe (3) an einem unteren Rand der Erfassungsfläche kleiner ist als ein Mindestwert in der Fahrzeugbreitenrichtung eines Abstands zwischen der Erfassungsfläche und der Innenfläche der Fensterscheibe an einem oberen Rand der Erfassungsfläche (9), und
wobei die Erfassungsfläche (9) als eine Fläche definiert ist, die durch sukzessives Anordnen von Positionen zwischen dem optischen System und der Erfassungslinie (6) erzeugt wird, um den blockierten Zustand zu bewirken, wenn sich der Fremdkörper dort befindet.

2. Fahrzeugtür (2) nach Anspruch 1, wobei das optische System an einer Position angeordnet ist, die einer Öffnung entspricht, die auf einer oberen Fläche einer Türverkleidung ausgebildet ist, so dass eine optische Achse des optischen Systems durch die Öffnung verläuft, wobei die Türverkleidung an einer Fahrzeuginnenseite des Aufbewahrungsabschnitts (21) angebracht ist, und die Erfassungslinie (6) entlang mindestens eines oberen Abschnitts der Außenkante des Fensterglases (3) in dem Zustand vorgesehen ist, in dem die Tür (2) und das Fensterglas (3) geschlossen sind, wobei der obere Abschnitt ein Schließende für das Fensterglas (3) ist.

3. Fahrzeugtür (2) nach Anspruch 2, wobei ein Abstand in Richtung der Fahrzeugbreite zwischen der Erfassungslinie und der Fensterscheibe (§) größer ist als ein Abstand in Richtung der Fahrzeugbreite zwischen der Kamera und der Fensterscheibe.

4. Fahrzeugtür (2) nach einem der Ansprüche 1 bis 3, ferner mit Lichtquellen, die Infrarotstrahlung in Richtung der Erfassungslinie emittieren,
wobei die Kamera (7) eine Infrarotkamera umfasst, die die von den Lichtquellen emittierte und von der Erfassungslinie reflektierte Infrarotstrahlung aufnimmt.

5. Fahrzeugtür (2) nach einem der Ansprüche 1 bis 4, wobei die Steuereinheit (5) ferner eine Befehlsaufhebungseinrichtung umfasst, die einen Befehl zum Bewegen der Fensterscheibe (3) aufhebt, wenn der blockierte Zustand durch die Erfassungseinrichtung (51) nach Ausgabe des Befehls und vor Beginn der Bewegung der Fensterscheibe erfasst wird.

6. Fahrzeug, umfassend die Fahrzeugtür (2) nach einem der Ansprüche 1 bis 5.

7. Fahrzeug nach Anspruch 6, wobei die Erfassungsfläche (9) in einem Bereich ausgebildet ist, der der Fensterscheibe (3) in Fahrzeugbreitenrichtung zugewandt ist, mit Ausnahme eines Bereichs an einer unteren Rückseite des Fahrzeugs.

## Revendications

1. Une porte de véhicule (2) comprenant :
une partie de stockage (21) comprenant une vitre (3) ; et
un dispositif (1) de levage/abaissement de vitre de véhicule,
le dispositif de levage/abaissement de vitre de véhicule (1) comprend :
un mécanisme d'entraînement (4) agencé sur la porte de véhicule (2) pour déplacer verticalement la vitre de la fenêtre ;
une unité de commande (5) pour commander le mécanisme d'entraînement (4) ;
une ligne de détection (6) prévue sur le côté intérieur du véhicule de la porte de véhicule (2) par rapport à la vitre (3), la ligne de détection étant le long d'au moins une partie du bord extérieur de la vitre (3) dans un état dans lequel la porte et la vitre sont fermées ; et
un appareil de prise de vues (7) prévu sur la porte de véhicule pour capturer une image de la ligne de détection (6),
l'appareil de prise de vues (7) comprenant un système optique comprenant au moins un objectif et un dispositif de capture d'image sur lequel une image de sujet est focalisée par le système optique,
l'unité de commande (5) comprenant un moyen de détection (51) pour détecter un état bloqué dans lequel la ligne de détection capturée dans une image par l'appareil de prise de vues (7) est au moins partiellement bloquée par un objet étranger, et un moyen de prévention de pincement (52) qui amène le mécanisme d'entraînement (4) à effectuer une opération de prévention de pincement pour empêcher le pincement par la vitre (3) lorsque l'état bloqué est détecté par les moyens de détection pendant que la vitre (3) est déplacée par le mécanisme d'entraînement,
**caractérisée en ce que**
une valeur minimale dans la direction de la largeur du véhicule d'une distance entre une surface de détection (9) et une surface intérieure de la vitre (3) au niveau d'un bord inférieur de la surface de détection est inférieure à une valeur minimale dans la direction de la largeur du véhicule d'une distance entre la surface de détection et la surface intérieure de la vitre au niveau d'un bord supérieur de la surface de détection (9), et
la surface de détection (9) étant définie comme étant une surface générée en agençant successivement des positions entre le système optique et la ligne de détection (6) pour provoquer l'état bloqué lorsque l'objet étranger est localisé au niveau de celle-ci.

2. La porte de véhicule (2) selon la revendication 1, dans laquelle le système optique est disposé en une position correspondant à une ouverture formée sur une surface supérieure d'une garniture de porte de sorte qu'un axe optique du système optique traverse l'ouverture, la garniture de porte étant fixée sur un côté intérieur du véhicule de la partie de stockage (21), et la ligne de détection (6) est prévue le long d'au moins une partie supérieure du bord extérieur de la vitre (3) dans l'état dans lequel la porte (2) et la vitre (3) sont fermées, la partie supérieure étant une extrémité de fermeture pour la vitre (3).

3. La porte de véhicule (2) selon la revendication 2, dans laquelle une distance dans la direction de la largeur du véhicule entre la ligne de détection et la vitre (§) est supérieure à une distance dans la direction de la largeur du véhicule entre l'appareil de prise de vues et la vitre.

4. La porte de véhicule (2) selon l'une quelconque des revendications 1 à 3, comprenant en outre des sources lumineuses émettant un rayonnement infrarouge vers la ligne de détection,
l'appareil de prise de vues (7) comprenant un appareil de prise de vues infrarouge qui capte le rayonnement infrarouge émis par les sources lumineuses et qui est réfléchi par la ligne de détection.

5. La porte de véhicule (2) selon l'une quelconque des revendications 1 à 4, dans laquelle l'unité de commande (5) comprend en outre un moyen d'annulation de commande qui annule une commande de déplacement de la vitre (3) lorsque l'état bloqué est détecté par les moyens de détection (51) après avoir émis la commande et avant de commencer le mouvement de la vitre.

6. Un véhicule, comprenant la porte de véhicule (2) selon l'une quelconque des revendications 1 à 5.

7. Le véhicule selon la revendication 6, dans lequel la surface de détection (9) est formée dans une zone tournée vers la vitre (3) dans la direction de la largeur du véhicule à l'exclusion d'une zone située sur un côté inférieur arrière du véhicule.
